# EUROPÄISCHE PATENTANMELDUNG

(11) **EP 0 565 130 A1**
(43) Veröffentlichungstag der Anmeldung: **13.10.1993**
(21) Anmeldenummer: 93105964.6
(22) Anmeldetag: 13.04.1993
(51) Int. Cl.: B65D 41/04

(54) **Verschlussdeckel**

(30) Priorität: 10.04.1992 DE 4212141
(71) Anmelder: Sooth, Jürgen, D-82346 Andechs (DE)
(72) Erfinder: Sooth, Jürgen, D-82346 Andechs (DE)
(74) Vertreter: Grünecker, Kinkeldey, Stockmair & Schwanhäusser Anwaltssozietät

(57) **Zusammenfassung**

Es wird ein Verschlußdeckel für die Öffnung eines Behälters, insbesondere einer Mehrweg-Glasflasche, beschrieben. Der Verschlußdeckel weist ein Deckteil (2) und einen Schraubflansch (3) auf, wobei im Deckteil eine elastische Dichtung (6) angeordnet ist, die von oben am Öffnungsrand des Behälters angreift. Der Schraubflansch (3) hat Gewindevorsprünge (9), die mit ihren Oberseiten die Unterseiten von am Behälter angeordneten Gewindesegmenten untergreifen. Um einen derartigen Verschlußdeckel auf konstruktiv einfache Weise recyclingfähig zu machen, wird vorgeschlagen, den Verschlußteil einteilig aus Kunststoff herzustellen und als Dichtung ein Paar im Abstand nebeneinanderliegender, nach unten weisender, kreisringförmiger Dichtlippen (7a,7b) an einer Dichtfläche am Deckteil anzuformen. Weiterhin wird die Form der Oberseiten der Gewindevorsprünge an die Form der Unterseiten der Gewindesegmente angepaßt, so daß die beiden Oberflächen im wesentlichen vollflächig aneinander anliegen.

## Beschreibung

Die Erfindung bezieht sich auf einen Verschlußdeckel der im Oberbegriff von Anspruch 1 erläuterten Art.

Bisher werden zum Verschließen von Mehrweg-Glasflaschen Metalldeckel verwendet, deren unterer Rand ungebördelt und an voneinander beabstandeten Stellen leicht nach innen eingedrückt ist, so daß Vorsprünge gebildet werden, die die Gewindesegmente am Hals der Flasche untergreifen. Die Vorsprünge erstrecken sich jedoch in Umfangsrichtung, d.h. sie stehen im Winkel zu den eher spiralig verlaufenden Gewindesegmenten am Flaschenhals. Als Dichtung wird in das Innere des bekannten Verschlußdeckels ein Kunststoffschaum fest eingebracht, der sich kaum wieder entfernen läßt. Durch diesen Kunststoffschaum ist jedoch der bekannte Verschlußdeckel schwer oder überhaupt nicht recyclingfähig.

Aus der EP-A-476 259 ist eine Verschlußkappe aus Vollkunststoff für mit einem Partialgewinde versehenen Behälter beschrieben. Die bekannte Verschlußkappe hat einen doppelwandigen Schraubflansch, wobei die innere Wand mit den Gewindevorsprüngen versehen ist und mit der äußeren Wand über ein Druckübertragungsglied in Verbindung steht. Mit Hilfe dieses Druckübertragungsglieds soll die Kappe beim Aufschrauben teilweise verformt werden, so daß trotz der gegenüber Metalldeckeln höheren Elastizität des Werkstoffes eine genügend hohe Schließkraft aufgebracht werden kann, um zu verhindern, daß sich der Deckel beispielsweise bei Erschütterungen während des Transports selbsttätig löst. Die Gewindevorsprünge verlaufen schräg, sind jedoch nicht für eine vollflächige Anlage an der Unterseite genormter Gewindesegmente des Behälters ausgelegt. Als Dichtung findet nur eine einzige Dichtlippe Verwendung, die entweder auf der Oberseite oder am inneren Rand der Behälteröffnung aufgesetzt wird. Eine Zentrierfläche ist nicht vorgesehen.

Der Erfindung liegt somit die Aufgabe zugrunde, einen leicht herstellbaren, dichtschließenden und recyclingfähigen Verschlußdeckel bereitzustellen.

Die Aufgabe wird durch die kennzeichnenden Merkmale des Anspruchs 1 gelöst.

Durch die erfindungsgemäße Ausbildung der Dichtung wird eine wirksame Abdichtung an der Oberseite des Glasrandes bewirkt, wo erfahrungsgemäß die geringsten Herstellungstoleranzen auftreten. Durch die doppelte Ausbildung der Dichtlippen kann auch ein beschädigter Rand noch wirksam abgedichtet werden. Durch die speziellen formschlüssig an die genormten Gewindesegmente einer Flasche angepaßten Vorsprünge wird eine erhöhte Reibung im Schraubverschluß erzielt und andererseits der Verschlußdeckel so fest auf die Flasche aufgeschraubt, daß sich die Dichtlippen für eine optimale Abdichtung verformen können, so daß der Deckel auch bei Erschütterungen sicher sitzt.

Die Querschnittsform gemäß Anspruch 2 sowie deren Höhe gemäß Anspruch 3 erleichtert die Verformung der Dichtlippe und verbessert die Dichtwirkung, da durch die elastische Verformung der Dichtlippen eine Art Federkraft aufbebracht wird.

Die Ausgestaltung nach Anspruch 4 erleichtert auf konstruktiv einfache Weise das Aufschrauben des Deckels.

In den Ausgestaltungen nach den Ansprüchen 5 und 6 erhöht die Zentrierfläche zusätzlich die Dichtwirkung.

Die nach oben weisenden Rippen gemäß Anspruch 7 verhindern, daß die Deckel, insbesondere im nassen Zustand, in der Verarbeitungsmaschine vor dem Aufschrauben zusammenkleben. Dieser Trenneffekt wird noch weiter erhöht, wenn die Vorsprünge gemäß Anspruch 8 ein spitz zulaufendes Profil aufweist.

Besonders zweckmäßig in der Funktion und einfach herzustellen, sind die Vorsprünge in der Form der in den Ansprüchen 9 und 10 beschriebenen Rippen.

Der in Anspruch 11 beschriebene Winkelabstand der Rippen ist sowohl für die Handhabung beim Verbraucher als auch für die Handhabung in einer Verschraubmaschine zweckmäßig.

Für herkömmlich genormte Gewindesegmente an Mehrweg-Glasflaschen eignen sich die in den Ansprüchen 12 bis 15 beschriebenen Ausgestaltungen und Abmessungen der Gewindevorsprünge des Verschlußdeckels.

Der in den Ansprüchen 16 und 17 angegebene Stopper verhindert ein Überdrehen des Verschlußdeckels.

Anspruch 18 beschreibt ein weiteres Ausführungsbeispiel eines erfindungsgemäßen Verschlußdeckels bei dem die Dichtung im wesentlichen über die Zentrierfläche erfolgt.

Ausführungsbeispiele der Erfindung werden nachfolgend anhand der Zeichnungen näher erläutert. Es zeigen:
- Fig. 1: eine Draufsicht auf einen erfindungsgemäßen Verschlußdeckel,
- Fig. 2: den Schnitt II-II aus Fig. 1,
- Fig. 3: den vergrößerten Schnitt III-III aus Fig. 1,
- Fig. 4: eine vergrößerte, abgewickelte Darstellung eines Gewindevorsprung,
- Fig. 5: das vergrößerte Detail A aus Fig. 2 mit einem Teil einer Glasflasche,
- Fig. 6: eine Darstellung ähnlich Fig. 4 eines Ausführungsbeispiels, und
- Fig. 7: den Schnitt VII-VII aus Fig. 6.

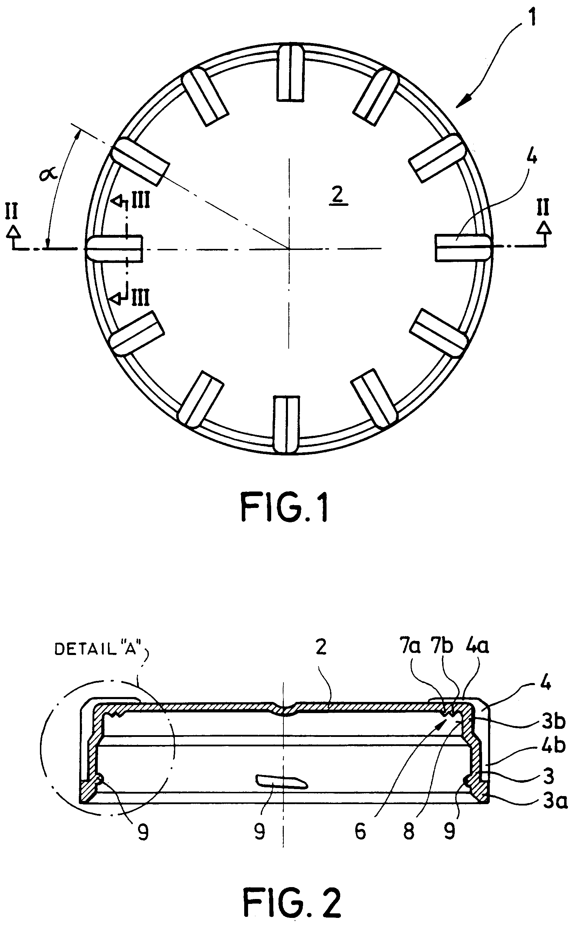

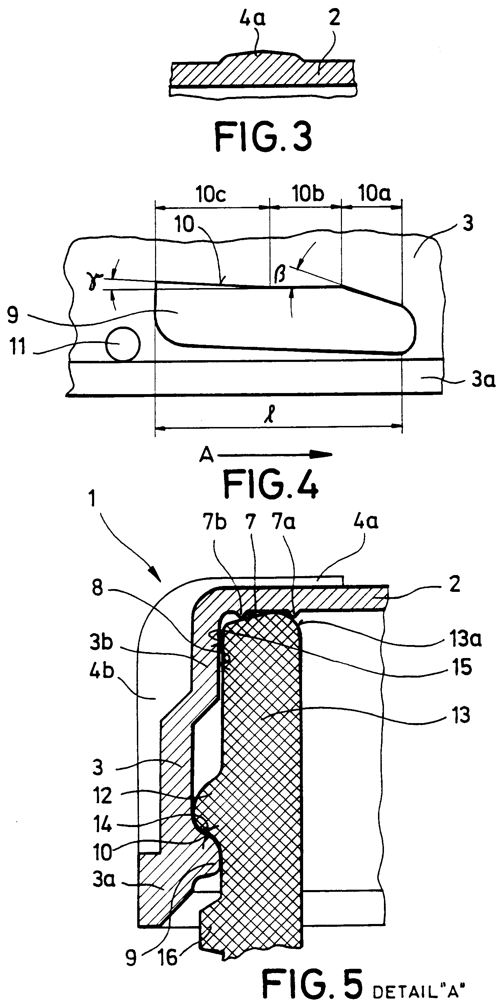

Aus Fig. 1 ist eine Draufsicht auf einen Verschlußdeckel 1 für eine Mehrweg-Glasflasche ersichtlich. Der Verschlußdeckel 1 ist mit allen seinen nachfolgend beschriebenen Teilen einstückig aus Kunststoff, insbesondere Polypropylen hergestellt. Wie auch in Verbindung mit Fig. 2 zu sehen, enthält der Verschlußdeckel 1 ein im wesentlichen kreisförmiges Deckteil 2 und einen vom Deckteil 2 zylindrisch nach unten vorstehenden Schraubflansch 3. An der Außenseite des Verschlußdeckels 1 erstrecken sich über die aneinander angrenzenden Bereiche des Deckteils 2 und des Schraubflansches 3 Rippen 4, die in einem Winkelabstand α von etwa 30° gleichmäßig verteilt rund um den Umfang des Verschlußdeckels 1 angeordnet sind. Im Bereich des Deckteils 2 sind die Rippen 4 als Radialrippen 4a mit einem in Fig. 3 gezeigten, nach oben hin spitz zulaufenden, dachförmigen Profil ausgebildet, durch das eine vollflächige Auflage des Deckels auf irgendeiner Fläche, und somit das Haften auf dieser Fläche, insbesondere bei Anwesenheit von Feuchtigkeit, verhindert wird. Die Radialrippen 4a erstrecken sich im dargestellten Ausführüngsbeispiel über etwa ein Drittel des Außendurchmessers des Verschlußdeckels, sie können ihre Funktion jedoch auch erfüllen, wenn sie kürzer oder länger sind.

Im Bereich des Schraubflansches 3 sind die Rippen 4 als Griffrippen 4b ausgestaltet und erstrecken sich axial über fast die gesamte axiale Länge des Schraubflansches 3, bis zu einem am freien Ende des Schraubflansches 3 angeordneten Verstärkungsflansch 3a.

Im Inneren des Verschlußdeckels 1 ist im Bereich des Übergangs zwischen dem Deckteil 2 und dem Schraubflansch 3 eine Dichtung 6 vorgesehen. Die Dichtung 6 enthält eine Dichtfläche 7 und zwei koaxial zum Deckteil 3 angeordnete, von der Dichtfläche 7 vorstehende, kreisringförmige Dichtlippen 7a, 7b, die in einem geringen Abstand zueinander verlaufen. Die Dichtlippen 7a, 7b weisen einen im wesentlichen dreieckigen Querschnitt mit nach unten weisender Spitze auf und sind so elastisch, daß sie beim Aufschrauben verformt werden können. Die Höhe der Dichtlippen 7a, 7b über der Dichtfläche 7 ist so bemessen, daß sich die Dichtlippen 7a, 7b im wesentlichen nur elastisch und nicht bleibend verformen, wenn die Dichtfläche 7 am Öffnungsrand des Behälters anliegt, so daß die Dichtung 6 auch beim Wiederverschließen, nach dem erstmaligen Abschrauben des Deckels, noch dichtet. Der sich an die Dichtfläche 7 und die Dichtlippen 7a, 7b anschließende Bereich des Schraubflansches 3 ist als zylindrische Zentrierfläche 8 ausgebildet. Die zylindrische Zentrierfläche 8 liegt in einem Bereich 3b des Schraubflansches 3 mit reduziertem Innendurchmesser.

In der Nähe des freien Endes des Schraubflansches 3 sind eine Mehrzahl von gleichmäßig um den Innenumfang des Schraubflansches 3 verteilt angeordnete, identisch ausgebildete Gewindevorsprünge 9 vorgesehen. Im dargestellten Ausführungsbeispiel sind vier derartiger Gewindevorsprünge 9 vorhanden, die um jeweils 90° zueinander versetzt angeordnet sind.

Jeder der Gewindevorsprünge 9 hat die in Fig. 4 dargestellte Form. Jeder der Gewindevorsprünge 9 hat eine gerade Länge l von etwa 10mm (abgerundete Kanten nicht mitgerechnet). Die nach oben weisende Oberfläche 10 jedes Vorsprunges 9 ist, bedingt durch die nachfolgend beschriebenen Abschrägungen, geringfügig länger. Die nach oben weisende Oberseite 10 enthält einen ersten Bereich 10a, der in Schraubrichtung A beim Zuschrauben vorläuft. Der Bereich 10a ist etwa 2,5mm lang und ist unter einem Winkel β um etwa 13 bis 14°, bevorzugt 13°40', geneigt. An den Bereich 10a schließt sich nach hinten ein zweiter Bereich 10b an, der im wesentlichen horizontal verläuft und ebenfalls etwa 2,5mm lang ist. An dem Bereich 10b schließt sich nach hinten ein dritter Bereich 10c an, der etwa 5mm lang ist und unter einem Winkel γ zwischen 3 und 4°, insbesondere 3° 30', geneigt verläuft. Die Dicke und die Breite des Gewindevorsprunges 9 wurde nach Gesichtspunkten einer guten Festigkeit ausgewählt und liegt bei jeweils etwa 2,2mm.

Wenigstens einem der Gewindevorsprünge 9 kann der in Fig. 4 dargestellte Überdreh-Stopper 11 zugeordnet sein. Der Stopper besteht bevorzugt aus einem in Schließ-Aufdrehrichtung A hinter einem Gewindevorsprung 9 und unterhalb dessen Oberseite 10 angeformten, halbkugelförmigen oder zylindrischen Ansatz, der mit einem Ansatzflansch 16 am Behälter in Anlage kommt.

Wird der erfindungsgemäße Verschlußdeckel 1, wie in Fig. 5 gezeigt, auf einen mit herkömmlich genormten Gewindesegmenten 12 versehenen Flaschenhals 13 aufgeschraubt, so untergreifen die Gewindevorsprünge 9 des Verschlußdeckels 1 die Gewindesegmente 12. Durch die Form der nach oben weisenden Oberseiten 10 der Gewindesegmente 9 gemäß Fig. 4, die der Form der nach unten weisenden Oberflächen 14 der Gewindesegmente 12 entsprechen, liegen die Flächen 10 und 14 vollflächig aneinander an, so daß sich die größtmögliche Reibung ergibt. Der Abstand zwischen den Dichtlippen 7a, 7b und der Oberfläche 10 des Gewindevorsprungs 9 ist so bemessen, daß die Dichtlippen 7a, 7b auf einem nach oben weisenden Rand 13a des Flaschenhalses aufliegen und elastisch deformiert werden, bis sich die Dichtfläche 7 auf den Rand 13 a auflegt, so daß sich eine feste Abdichtung ergibt. Gleichzeitig legt sich die Zentrierfläche 8 an eine korrespondierende Außenfläche 15 des Flaschenhalses 13 an, so daß sich eine weitere Abdichtmöglichkeit ergibt. Der Überdreh-Stopper 11 kommt mit einem normalerweise an Mehrweg-Glasflaschen vorhandenen Abschlußflansch 16 in Eingriff, und verhindert somit, daß das Gewinde überdreht wird und sich der Deckel 1 wieder löst. Durch die erfindungsgemäße Ausgestaltung wird zwischen dem Gewinde und der Dichtung die notwendige Kraft aufgebracht, um die Dichtlippen 7a, 7b zu deformieren. Gleichzeitig liegen die einander zugewandten Oberflächen 10 und 14 der Gewindevorsprünge 9 und der Gewindesegmente 12 vollflächig aufeinander, so daß eine ausreichende Reibungskraft vorhanden ist, die den Deckel gegen ein unbeabsichtigtes Lösen oder ein Lockern während des Transports sichert. Durch geeignete Kleber kann über den Verschlußdeckel aus Kunststoff und die Flasche eine Banderole geklebt werden, die dem Käufer die Garantie gibt, daß die Flasche noch nicht geöffnet wurde.

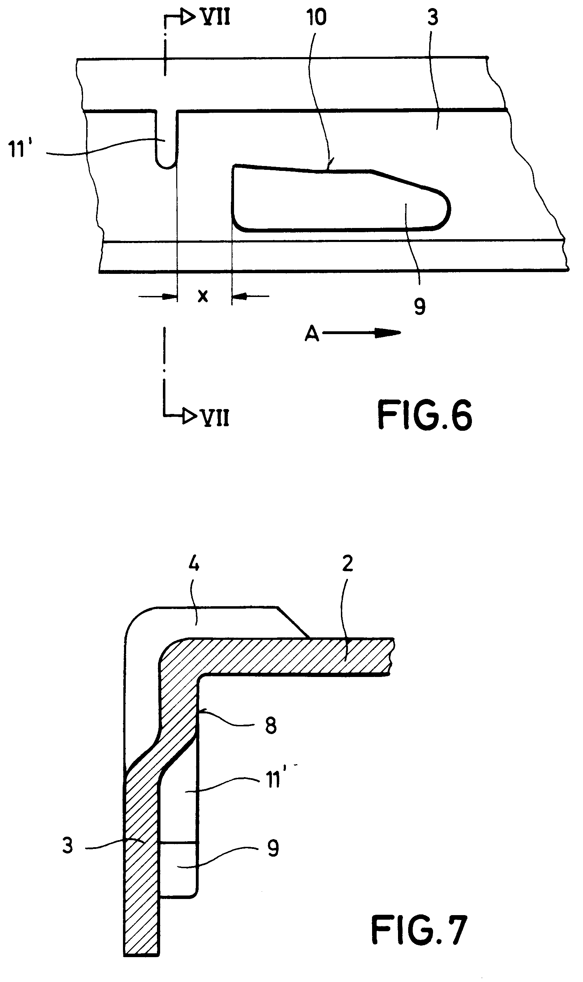

Die Fig. 6 und 7 zeigen ein weiters Ausführungsbeispiel des erfindungsgemäßen Verschlußdeckels mit einem abweichenden Überdreh-Stopper 11'. Der Überdreh-Stopper 11' ist als Rippe ausgebildet und am Schraubflansch 3, von der Zentrierfläche 8 nach unten vorstehend angeformt. Der Überdreh-Stopper 11' endet oberhalb der Oberseite 10 des Gewindevorsprunges 9 und liegt mit einem Abstand x in Zuschraub-Richtung A hinter einem jeweils zugeordneten Gewindevorsprung 9. Der Abstand x kann (in der abgewickelten Darstellung) 6 bis 8mm betragen. Wie insbesondere aus Fig. 7 ersichtlich ist, liegen die Zentrierfläche 8, die nach innen vorstehende Oberseite des Überdreh-Stoppers 11' und die Oberseite des Gewindevorsprungs 9 auf einer axialen Linie, so daß beispielsweise auch die Oberseite des Überdreh-Stoppers 11' zur Zentrierung des Deckels herangezogen werden kann. Der Überdreh-Stopper 11' ist derart angeordnet, daß beim Aufschrauben des Verschlußdeckels auf einen Behälter eine sich im wesentlichen in Axialrichtung erstreckende Begrenzungsfläche eines zugeordneten Gewindesegments am Behälter an den Überdreh-Stopper anstößt und damit ein weiteres Aufschrauben verhindert.

In Abwandlung des beschriebenen und gezeichneten Ausführungsbeispiels können die Dichtlippen einen stegartigen, abgerundeten oder einen anderen geeigneten Querschnitt aufweisen. Die Zentrierfläche muß nicht unbedingt eine durchgehende Zylinderfläche sein, sondern kann auch bereichsweise auf Stegen angeordnet werden. Gegebenenfalls kann der Überdreh-Stopper entfallen. Die Griffrippen können durch Griffmulden und die radialen Abstandsrippen durch andersgeartete Vorsprünge ersetzt werden. Schließlich können die Gewindevorsprünge länger oder kürzer sein als angegeben.

## Patentansprüche

1. Verschlußdeckel (1) für die Öffnung (13) eines Behälters, insbesondere einer Mehrweg-Glasflasche, mit einem Deckteil (7) und einem Schraubflansch (3), wobei im Deckteil (2) eine elastische Dichtung (6) angeordnet ist, die von oben am Öffnungsrand (13a) des Behälters angreift, und der Schraubflansch (3) eine Mehrzahl von Gewindevorsprüngen (9) aufweist, die mit ihren Oberseiten (10) die Unterseiten (14) von am Behälter angeordneten Gewindesegmenten (12) untergreifen, **gekennzeichnet durch** seine einteilige Herstellung aus Kunststoff, wobei die Dichtung (6) ein Paar im Abstand nebeneinanderliegender, nach unten weisender, kreisringförmiger, an einer Dichtfläche (7) am Deckteil (2) angeformter Dichtlippen (7a, 7b) aufweist, und wobei die Oberseiten (10) der Gewindevorsprünge (9) wenigstens bereichsweise unter einem Winkel (β, γ) zur Horizontalen verlaufen und in der Form derart an die Unterseiten (14) der Gewindesegmente (9) angepaßt sind, daß beide im wesentlichen vollflächig aneinander anliegen.

2. Verschlußdeckel nach Anspruch 1, **dadurch gekennzeichnet**, daß die Dichtlippen (7a, 7b) einen im wesentlichen dreieckigen Querschnitt aufweisen.

3. Verschlußdeckel nach Anspruch 1 oder 2, **dadurch gekennzeichnet,** daß die Höhe der Dichtlippen (7a, 7b) derart bemessen ist, daß die Dichtlippen (7a, 7b) lediglich elastisch verformt sind, wenn die Dichtfläche (7) am Öffnungsrand des Behälters anliegt.

4. Verschlußdeckel nach einem der Ansprüche 1 bis 3, **dadurch gekennzeichnet**, daß am Schraubflansch (3) eine Zentrierfläche (8) angeformt ist, die an einer der Öffnung zugeordneten Außenfläche (15) des Behälters anliegt.

5. Verschlußdeckel nach Anspruch 4, **dadurch gekennzeichnet,** daß die Zentrierfläche (8) in der Nähe der Dichtung (6) angeordnet ist.

6. Verschlußdeckel nach Anspruch 4 oder 5, **dadurch gekennzeichnet**, daß die Zentrierfläche (8) zylindrisch ist.

7. Verschlußdeckel nach einem der Ansprüche 1 bis 6, **dadurch gekennzeichnet**, daß an einer nach oben weisenden Außenfläche des Deckteils (2) radial zum Deckteil verlaufende Rippen (4a) angeformt sind.

8. Verschlußdeckel nach Anspruch 7, **dadurch gekennzeichnet**, daß die Vorsprünge (4a) ein von der Außenfläche weg spitz laufendes Profil aufweisen.

9. Verschlußdeckel nach Anspruch 8, **dadurch gekennzeichnet**, daß sich die Rippen über etwa ein Viertel bis ein Drittel des Radius des Deckteils (2) erstrecken.

10. Verschlußdeckel nach Anspruch 8 oder 9, **dadurch gekennzeichnet,** daß die radial verlaufenden Rippen als Verlängerung von am äußeren Umfang des Schraubflanschs (3) angeformten, axial verlaufenden Griffrippen (4b) ausgebildet sind.

11. Verschlußdeckel nach Anspruch 10, **dadurch gekennzeichnet**, daß die Griffrippen (4b) in einem Winkelabstand (α) von etwa 30° zueinander angeordnet sind.

12. Verschlußdeckel nach einem der Ansprüche 1 bis 11, **dadurch gekennzeichnet**, daß die Oberseite (10) der Gewindevorsprünge (9) in Umfangsrichtung etwa 10mm lang ist.

13. Verschlußdeckel nach einem der Ansprüche 1 bis 12, **dadurch gekennzeichnet**, daß die Oberseite (10) der Gewindevorsprünge (9) einen ersten (10a) unter einem ersten Winkel (β) geneigten und einen zweiten (10c) unter einem zweiten Winkel (γ) geneigten Bereich aufweist, wobei der erste Winkel (β) größer als der zweite Winkel (γ) ist.

14. Verschlußdeckel nach Anspruch 13, **dadurch gekennzeichnet**, daß zwischen den ersten und den zweiten im Winkel zur Horizontalen verlaufenden Bereichen (10a, 10b) ein weiterer im wesentlichen horizontal verlaufender Bereich (10b) der Oberseite (10) angeordnet ist.

15. Verschlußdeckel nach einem der Ansprüche 12 bis 14, **dadurch gekennzeichnet**, daß die Oberseite (10) über etwa ein Viertel (10a) der Länge unter einem Winkel von etwa 13 bis 14°, insbesondere 13°40', geneigt, über das anschließende Viertel (10b) der Länge geradlinig verläuft und anschließend etwa über die restliche Hälfte (10c) der Länge unter einem Winkel von etwa 3 bis 4°, insbesondere 3°30', gegenüber der Horizontalen geneigt ist.

16. Verschlußdeckel nach einem der Ansprüche 1 bis 15, **dadurch gekennzeichnet**, daß wenigstens einem Gewindevorsprung (9) ein Überdreh-Stopper (11, 11') zugeordnet ist.

17. Verschlußdeckel nach Anspruch 16, **dadurch gekennzeichnet**, daß der Überdreh-Stopper (11, 11') ein vom Schraubflansch (3) nach innen vorstehender Vorsprung zum Eingriff mit einem am Behälter angeordneten Flansch (12, 16) ist.

18. Verschlußdeckel (1) für die Öffnung (13) eines Behälters, insbesondere einer Mehrweg-Glasflasche, mit einem Deckteil (2) und einem Schraubflansch (3), wobei im Deckteil (2) eine elastische Dichtung (6) angeordnet ist, die von oben am Öffnungsrand (13a) des Behälters angreift, und der Schraubflansch (3) eine Mehrzahl von Gewindevorsprüngen (9) aufweist, die mit ihren Oberseiten (10) die Unterseiten (14) von am Behälter angeordneten Gewindesegmenten (12) untergreifen, **gekennzeichnet durch** seine einteilige Herstellung aus Kunststoff, wobei am Schraubflansch (3) eine Zentrierfläche (8) angeformt ist, die an einer der Öffnung zugeordneten Außenfläche (15) des Behälters anliegt, und wobei die Oberseiten (10) der Gewindevorsprünge (9) wenigstens bereichsweise unter einem Winkel (β, γ) zur Horizontalen verlaufen und in der Form derart an die Unterseiten (14) der Gewindesegmente (9) angepaßt sind, daß beide im wesentlichen vollflächig aneinander anliegen.
